(19) Europäisches Patentamt
European Patent Office
Office européen des brevets

(11) EP 1 633 811 B1

(12) **EUROPEAN PATENT SPECIFICATION**

(45) Date of publication and mention of the grant of the patent:
**07.05.2008 Bulletin 2008/19**

(21) Application number: **04740001.5**

(22) Date of filing: **16.06.2004**

(51) Int Cl.:
***C08K 5/1535*** *(2006.01)* ***C08K 5/00*** *(2006.01)*
***D01F 1/10*** *(2006.01)* ***D01F 6/06*** *(2006.01)*

(86) International application number:
**PCT/EP2004/006542**

(87) International publication number:
**WO 2004/111120 (23.12.2004 Gazette 2004/52)**

(54) **OLEFIN POLYMERS WITH STABILISERS AND POLYOLEFIN FIBRES PRODUCED THEREFROM**

OLEFINPOLYMERE MIT STABILISATOREN UND DARAUS HERGESTELLTE POLYOLEFINFASERN

POLYMERES D'OLEFINE COMPRENANT DES STABILISANTS, ET FIBRES DE POLYOLEFINE PRODUITES A PARTIR DESDITS POLYMERES

(84) Designated Contracting States:
**AT BE BG CH CY CZ DE DK EE ES FI FR GB GR HU IE IT LI LU MC NL PL PT RO SE SI SK TR**

(30) Priority: **19.06.2003 EP 03013881**
**27.06.2003 US 482965 P**

(43) Date of publication of application:
**15.03.2006 Bulletin 2006/11**

(73) Proprietor: **Basell Poliolefine Italia S.r.l.**
**20124 Milano (IT)**

(72) Inventors:
- **SARTORI, Franco**
**I-44100 Ferrara (IT)**
- **SARTORI, Gabriella**
**I-44100 Ferrara (IT)**

(74) Representative: **Giberti, Stefano et al**
**Basell Poliolefine Italia S.r.l.**
**Intellectual Property**
**P.le Privato Donegani 12**
**44100 Ferrara (IT)**

(56) References cited:
**EP-A- 1 260 618** **GB-A- 2 322 374**
**US-A- 5 834 541**

- **KRÖHNKE C.: "A major breakthrough in polymer stabilisation" 1997, POLYOLEFINS X INTERNATIONAL PROCEEDINGS , XP009036220 the whole document**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to thermoweldable weldable fibres with improved bonding properties, thermal bonded non-woven fabric made from fibres produced from said polymers and a process for the preparation of said fibres. In particular, the invention relates to a polyolefin-based thermoplastic resin comprising a stabiliser mixture comprising at least one compound of the benzofuran-2-one type and a phenolic long-term stabiliser and thermal bondable fibres made up of such a stabilised polyolefin-based thermoplastic resin.

The definition of "fibres" also includes products similar to fibres, such as fibrils and cut filaments (staple fibres).

Fibres of certain thermoplastic materials are used widely in the manufacturing of thermally bonded products, such as non-woven fabrics, by various processes. Said processes are mainly staple carding/calendering, and any combination of them for composite structures of non-woven fabrics.

Thermal bonding staple by long and short spinning with carding/calendering is one of the main technologies applied to produce hygiene non-woven fabrics.

A fundamental requirement of polyolefin fibres for thermally bonded non-woven fabrics is that fibres bond to each other by means of the joint action of temperature and pressure on which the hot calendering process is based.

It is well known that additives to polymers have an effect on the bonding properties of the fibre and thus the mechanical properties of the non-woven fabric. Better bonding properties of the fibres lead to improved mechanical properties, in particular mechanical strength essentially defined by the bonding index, of the non-woven fabric.

Poor mechanical properties can sometimes be the consequence of remarkable oxidative degradation of the polymer as evidenced by increasing of melt flow rate.

It is also well known that fibres obtained by polymers containing the most commonly used stabilisers have little welding capability. Therefore, the mechanical properties of non-woven textiles obtained by calendering the above-mentioned fibres are poor.

Hence, there is a need for the production of thermal bondable fibres that are not affected by the said drawback.

It is known in the prior art from international patent WO 02/31038 that blends of a secondary aromatic amine, sterically hindered phenol and a lactone chosen from the class of 2-phenylbenzofuran-2-one impart good stability against oxidative degradation to polymers as evidenced by retention of melt flow rate. The stabilisation of polymer with the disclosed blend requires a quite high amount of sterically hindered phenols, at least 450 ppm, according to the working examples.

Polyolefin fibres stabilised with stabiliser mixtures containing a lactone of the benzofuran-2-one type are already well known. Such stabiliser mixtures are phenol-free. For example, US patent No. 6521681 discloses a stabiliser mixture comprising (i) a lactone of the benzofuran-2-one type and (ii) a sterically hindered amine. Such stabiliser mixture can further comprising a third component, namely (iii) an organic phosphonite or phosphite.

US patent No. 5834541 discloses a stabiliser olefin polymer suitable for fibres. The olefin polymer is stabilised with a stabilised system comprising a phosphite and a benzofuranone and/or an N,N-dialkylhydroxylamine.

European Patent 1260618 discloses staple fibres made from propylene polymer comprising a lactone chosen from the class of 2-phenylbenzofuran-2-one and, optionally, phosphite or phosphonite.

Such stabiliser mixtures for polyolefin fibres do not satisfy in every respect the requirements that the fibre is required to meet. The use of such stabiliser mixtures leads to fibres with poor mechanical properties, especially low tenacity and elongation at break.

A polymer with poor mechanical properties also affects the spinning behaviour; in fact breakage of several filaments occurs during spinning process.

Unexpectedly, it has now been found thermoplastic polyolefins that do not exhibit the above-mentioned drawbacks thanks to stabilisers that form mixtures with a synergistic effect. The stabilised polymer according to the present invention achieves a good level of stabilisation in the extruder (melt stabilizer) and a controlled level of oxidative degradation just outside the spinneret (long term thermal ageing) leading to a moderate increasing of the value of the melt flow rate. Hence, the fibres and non-woven fabric according to the present invention also exhibit good mechanical properties, in particular high tenacity and elongation at break.

Surprisingly, fibres produced with the stabilised polymer according to the present invention also possess high thermoweldability and bonding properties.

The great advantage of the polymer as stabilised according to the present invention is that the increase in thermoweldability of the fibres is not to the detriment of the mechanical properties to the fibre and, consequently, the non-woven fabric prepared therefrom.

The stabiliser polymer according to the present invention also improves the feasibility of the spinning process by reducing breakage of filaments during the spinning process.

The polymer composition and fibres according to the present invention exhibit no colouration although they contain a phenolic antioxidant because such antioxidant is present in small amounts. No colour change is an important requirement for certain applications, such as hygienic ones.

The present invention accordingly relates to thermoweldable fibres made up of an olefin polymer composition comprising (ppm with respect to the polymer):

- a lactone of the furan-2-one type,
- a phenol in amounts of 50 to 200 ppm,
- a sterically hindered amine according to claim 1 in amounts of 50 to 300 ppm, and
- an organic phosphite and/or organic phophonite in amounts of 50 to less than 280 ppm.

The polymer composition contains the unsubstituted furan-2-one moiety in amounts ranging from 11 to 49 ppm with respect to the polymer.

Preferably, the polymer composition contains 40 to 220 ppm, more preferably 50 to 200 ppm, of lactone of the furan-2-one type.

In one preferred embodiment of the invention, the lactone is of benzofurane-2-one type. Suitable benzofuran-2-ones and processes for making them are described in U.S. 4,325,863, 4,338,224, 5,175,312 and 5,344,860. The said compounds have already been applied in stabilising compositions or polyolefins as e.g. described in GB 2322374. '

Examples of such benzofuran-2-ones are compounds of formula (I)

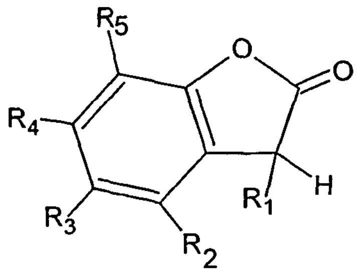

in which $R_1$ radical is any kind of substituent other than H, preferably non-substituted phenyl or substituted phenyl radicals; and $R_2$ to $R_5$ radicals independently are H or any kind of other substituents, preferably alkyl radicals.

Preferably, the substitutents bonded to the phenyl group are 1 to 3 alkyl radical(s) from 1 to 12 carbon atom (s), more preferably $C_1$-$C_4$ alkyl radical, and together having at most 18 carbon atoms, alkoxy radical(s) having 1 to 12 carbon atom(s), alkoxycarbonyl radical(s) having 2 to 18 carbon atoms or a halogen atom, such as chlorine.

Preferably $R_2$ is a radical of hydrogen, $R_4$ is a radical of hydrogen, linear or branched alkyl, having 1 to 12 carbon atoms(s), a $C_4$-$C_8$ cycloalkyl, such as cyclopentyl, cyclohexyl, or a halogen atom, such as chlorine; $R_3$ radical has a meaning of $R_2$ or $R_4$ radical or is a radical of the formula

$-(CH_2)_n-CO-O-R_6$; $-(CH_2)_n-CO-N(R_7)_2$; $-(CH_2)_n-CO-O-A-O-CO-(CH_2)_n-E$;

$-(CH_2)_n-CO-NR_8-A-NR_9-CO-(CH_2)_n-E$; $-(CH_2)_n-CO-NR_8-A-O-CO-(CH_2)_n-E$;

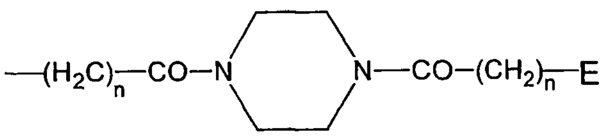

$-CH_2-S-R_9$; $-CH(C_6H_5)-GO-O-R_6$; or -D-E,

in which $R_6$ is a radical of hydrogen, linear or branched alkyl having 1 to 18 carbon atom(s), alkyl having 2 to 18 carbon atoms which is interrupted by oxygen or sulfur, dialkylaminoalkyl having a total of 3 to 16 carbon atoms, a $C_4$-$C_8$ cycloalkyl, such as cyclopentyl, cyclohexyl, phenyl or phenyl which is substituted by 1 to 3 alkyl radicals together having at most 18 carbon atoms;

n is 0, 1 or 2;

the substituents $R_7$, independently of one another, are a radical of hydrogen, linear or branched alkyl having 1 to 18 carbon atom(s), a $C_4$-$C_8$ cycloalkyl, such as cyclopentyl, cyclohexyl, phenyl, phenyl which is substituted by 1 or 2 alkyl radicals together having at most 16 carbon atoms, a radical of the formula:

$-C_2H_4OH; -C_2H_4-O-C_mH_{2m+1}$ or $C_2H_4OCO-R_{10}$

or together with the nitrogen atom to which they are attached form a piperidine or morpholine radical;
mis 1 to 18;
$R_{10}$ is a radical of hydrogen, linear or branched alkyl having 1 to 22 carbon atom(s) or cycloalkyl having 5 to 12 carbon atoms;
A is a radical of alkylene having 2 to 22 carbon atoms which may be interrupted by nitrogen, oxygen or sulfur;
$R_8$ is a radical of hydrogen, linear or branched alkyl having 1 to 18 carbon atom(s), a $C_4$-$C_8$ cycloalkyl, such as cyclopentyl, cyclohexyl, phenyl, phenyl which is substituted by 1 or 2 linear or branched alkyl radical(s) together having at most 16 carbon atoms, or is benzyl; $R_9$ is a radical of alkyl having 1 to 18 carbon atom(s);
D is -O-; -S-; -SO-; $-SO_2-$ or $-C(R_{11})_2-$;
the substituents $R_{11}$, independently of one another, are a radical of hydrogen, $C_1$-$C_{16}$ alkyl, the two $R_{11}$ together containing 1 to 16 carbon atom(s), $R_{11}$ is furthermore phenyl radical or a radical of the formula

$-(CH_2)_n-CO-O-R_6$ or $-(CH_2)_n-CO-N(R_7)_2$;

in which n, $R_6$ and $R_7$ radicals are as defined above;
E is a radical of formula (II)

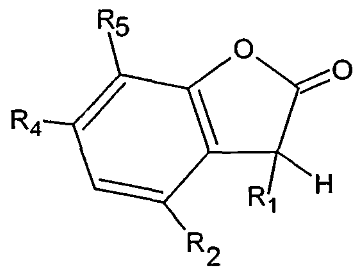

in which $R_1$, $R_2$ and $R_4$ radicals are as defined above for formula (I); and
$R_5$ is a radical of hydrogen, linear or branched alkyl having 1 to 20 carbon atom(s), a $C_4$-$C_8$ cycloalkyl, such as cyclopentyl, cyclohexyl radical, a halogen atom, such as chlorine, or a radical of the formula

$-(CH_2)_n-CO-O-R_6$ or $-(CH_2)_n-CO-N(R_7)_2$;

in which $R_6$ and $R_7$ radicals are as defined above, or $R_5$ radical together with $R_4$ radical formes a tetramethylene radical.

Preference is given to those benzofuran-2-ones in which $R_3$ is a radical of hydrogen, alkyl having 1 to 12 carbon atom(s), cyclopentyl, cyclohexyl, chlorine or a radical of the formula

$-(CH_2)_n-CO-O-R_6$; $-(CH_2)_n-CO-N(R_7)_2$ or -D-E,

in which n, $R_6$, $R_7$, D and E radicals are as defined above, $R_6$ is in particular a radical of hydrogen, alkyl having 1 to 18 carbon atom(s), a $C_4$-$C_8$ cycloalkyl, such as cyclopentyl or cyclohexyl radical.
Preference is given furthermore to those benzofuran-2-ones in which $R_1$ is a radical of phenyl or phenyl which is substituted by 1 or 2 linear or branched alkyl radical(s) together having at most 12 carbon atoms; $R_2$ is hydrogen radical; $R_4$ is a radical of hydrogen or linear or branched alkyl having 1 to 12 carbon atom(s); $R_3$ is a radical of hydrogen, linear or branched alkyl having 1 to 12 carbon atom(s), or a radical of the formulae

$-(CH_2)_n-CO-O-R_6$; $-(CH_2)_n-CO-N(R_7)_2$ or -D-E;

$R_5$ is a radical of hydrogen, linear or branched alkyl having 1 to 20 carbon atom(s), or a radical of the formula

$-CH_2-CO-O-R_6$ or $-CH_2-CO-N(R_7)_2$;

or $R_5$ radical together with $R_4$ radical forms a tetramethylene radical, n, $R_6$, $R_7$, D and E radicals being a defined at the beginning

The preferred lactone among the above-mentioned ones is the benzofuran-3-phenyl-2-one type.. Such compounds are represented by formula (I) wherein $R_1$ is a phenyl group and $R_2$ to $R_5$ independently is a radical of hydrogen or linear or branched alkyl, preferably hydrogen or $C_1$-$C_6$ alkyl radical.

Further preferred, the lactone comprises 5,7-di-tert-butyl-benzofuran-3-phenyl-2-one, a methyl substituted derivative thereof or a mixture of any of such compounds. Such compounds are represented by formula (I) wherein $R_3$ and $R_5$ are tert-butyl radicals, $R_2$ and $R_4$ radicals are hydrogen, $R_1$ is a radical of phenyl which may further be substituted with one or more methyl groups.

In a particular preferred embodiment the lactone comprises a compound selected from the group of 5,7-di-tert-butyl-benzofuran-3-phenyl-2-one, 5,7-di-tert-butyl-benzofuran-3-(3,4-di-methyl-phenyl)-2-one and 5,7-di-tert-butyl-benzofuran-3-(2,3-di-methyl-phenyl)-2-one or a mixture of any of such compounds. Most preferred, the lactone comprises Irganox® HP-136 of Ciba Speciality Chemicals, which is a mixture of the two last mentioned compounds.

Suitable phenolic antioxidants, which generally have a high molecular weight, have general formula:

(III)

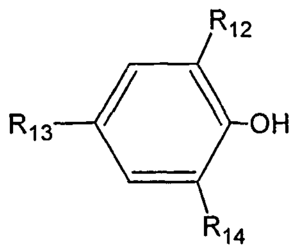

in which $R_{12}$ and $R_{14}$ radicals are equal to or different from each other, and are a radical of linear or branched alkyl group having from 1 to 12 carbon atom(s), and $R_{13}$ is a monovalent or polyvalent radical selected from alkyl, aryl, alkylaryl and cycloalkyl groups which can optionally contain heteroatoms, such as sulphur.

Examples of preferred phenolic antioxidants are: 2,6-dimethyl-3-hydroxy-4-ter-butyl benzyl abietate; tris(4-t-butyl-3-hydroxy-2,6-dimethylbenzyl)-s-triazine-2,4,6-(1H,3H,5H)-trione, which is commercially available from Cyanamid under the Cyanox 1790 trademark; calcium bi[monoethyl(3,5-di-ter-butyl-4-hydroxybenzyl)phosphonate]; 1,3,5-tris (3,5-di-ter-butyl-4-hydroxybenzyl)-s-triazine-2,4,6(1H,3H,5H)-trione; 1,3,5-trimethyl-2,4,6-tris(3,5-di-ter-butyl-4-hydroxybenzyl)benzene; pentaerythritil-tetrakis[3(3,5-di-ter-butyl-4-hydroxyphenyl)propionate], and octadecyl 3-(3',5'-di-tert-butyl-4'-hydroxyphenyl) propionate, all of them are commercially available from Ciba Speciality Chemical Corporation under the following trademarks: Irganox 1425, Irganox 3114, Irganox 1330, Irganox 1010, and Irganox1076, respectively.

The organic phosphites that can be used as additives for the polyolefins used according to the present invention are preferably selected from general formula

(IV)

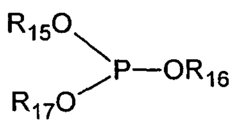

in which $R_{15}$, $R_{16}$, $R_{17}$, equal or different, are radicals of alkyl, aryl, or arylalkyl radicals having 1-18 carbon atom(s):

(V)

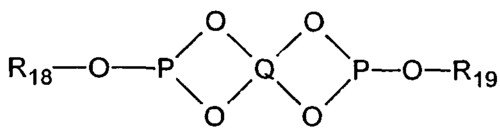

in which $R_{18}$ and $R_{19}$, equal or different, are radicals having the above-mentioned meaning for radical $R_{15}$; Q is a tetravalent alkyl radical, such as $C(CH_2-)_4$;

(VI)

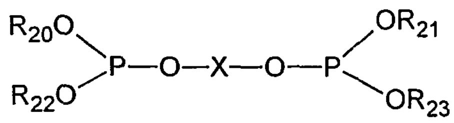

in which $R_{20}$, $R_{21}$, $R_{22}$, $R_{23}$, equal or different, are radicals having the significance already indicated for radicals $R_{15}$, X is a bivalent alkyl, aryl, or arylalkyl radical.

Examples or organic phosphites comprised in general formula IV are described in US Patents No. 4,187,212 and No. 4,290,941.

Specific examples of compounds included in general formulas IV, V, VI are: tris(2,4-di-ter-butylphenyl)phosplite commercially available from Ciba Speciality Chemicals Corporation under the Irgafos 168 trademark; distearyl pentaerythritol diphosphite commercially available from Borg-Warner Chemical under the Weston 618 trademark; 4,4'-butylidenebis(3-methyl-6-ter-butylphenil-ditridecyl)phosphite commercially available from Adeka Argus Chemical under the Mark P trademark; tris(monononyl-phenyl)phosphite; bis(2,4-di-ter-butyl)pentaerythritol diphosphite, commercially available from Borg-Warner Chemical under the Ultranox 626 trademark.

The organic phosphonites that can be used as additives according to the present invention are preferably selected among the compounds of general formula:

(VII)

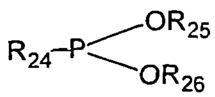

in which $R_{24}$, $R_{25}$, $R_{26}$, equal or different, are alkyl, aryl, or arylalkyl radicals having 1-18 carbon atom(s).

Alternatively, and this is preferred, the $R_{24}$ radical can be substituted by a group

(VIII)

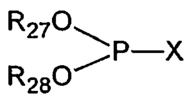

in which $R_{23}$ and $R_{24}$, equal or different, are radicals having the above indicated significance for the $R_{20}$ radicals, and X is a bivalent alkyl, aryl, or arylalkyl radical.

Examples or organic phosphonites included in general formula VII, which can conveniently be used according to the present invention, are described in GB patent No. 1,372,528.

A preferred example of compounds comprised in general formula VII is the tetrakis(2,4-di-ter-butylphenyl)4,4 min -diphenylenediphosphonite, commercially available from Sandoz under the Sandostab P-EPQ trademark.

The organic phosphites and phosphonites are generally used to inhibit degradation and oxidation of polyolefins in the molten state (process stabilizers), and therefore, according to the state of the art, require the addition of high quantities of phenolic stabilizers to obtain a complete stabilization.

The HALS, which according to the present invention are also used as polyolefins stabilisers, are amine compounds with steric hindrance of the aminic function, which are generally used as stabilisers for polyolefins in the solid state against oxidation induced by light.

In the said case as well, according to the state of the art, the addition of a high quantity of phenolic stabilisers is necessary for a satisfactory stabilization of polyolefin manufactured articles.

The HALS used according to the present invention are monomeric or oligomeric compounds containing, in the molecule, one or more substituted piperidine groups having general formula:

(IX)

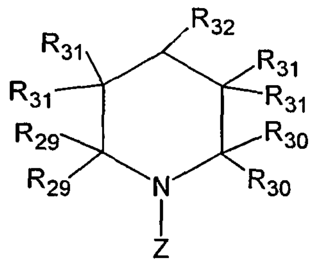

in which the $R_{29}$ radicals, equal or different, are $C_1$-$C_4$ alkyl radicals, or tetramethylpiperidine radicals, or the alkyl radicals form with the piperidine carbon atoms to which they are linked a $C_5$-$C_9$ cycloalkyl radical; the $R_{30}$ radicals, equal or different, are hydrogen or $C_1$-$C_{18}$ alkyl radicals, $C_7$-$C_{18}$ arylalkyl radicals, or the alkyl radical forms with the piperidine carbon atoms to which they are linked a $C_5$-$C_{10}$ cycloalkyl radical; the $R_{31}$ radicals, equal or different, are hydrogen, or $C_1$-$C_{18}$ alkyl radicals or $C_7$-$C_{18}$ arylalkyl radicals; the $R_{32}$ radical is hydrogen, or a $C_1$-$C_8$ alkyl radical, or a benzyl radical; Z is hydrogen, or a $C_1$-$C_{18}$ alkyl, $C_1$-$C_{12}$ alkylene, $C_3$-$C_{12}$ alkenyl, $C_3$-$C_5$ alkynyl, $C_7$-$C_{18}$ arylalkyl, $C_2$-$C_4$ acyl, $C_2$-$C_{18}$ alkanoyl, $C_3$-$C_{18}$ alkoxyalkyl, $C_3$-$C_{18}$ alkenoyl, oxylic, cyanomethyl, xylylenyl radical, or a radical having a 1 to 4 valence and containing from 1 to 4 hydroxyl groups and, optionally, ether, ester, or heterocyclic groups, being the valences of said radical linked to the nitrogen of piperidine groups, or a bivalent radical containing one or more ester or amide groups, or a -CO-N($R_{33}$)($R_{34}$) radical where $R_{33}$ and $R_{34}$ are hydrocarbon radicals.

Preferably Z is a $C_1$-$C_{12}$ alkyl radical, or a $C_3$-$C_8$ alkenyl, $C_7$-$C_{11}$ aralkyl radical, or a bivalent radical containing one or more ester groups, being the valences of said radicals linked to the nitrogen atom of piperidine groups.

Specific examples of preferred HALS according to the present invention include poly[[6-[(1,1,3,3-tetramethylbutyl)amino]-1,3,5-triazine-2,4-diyl][(2,2,6,6-tetramethyl-4-piperidinyl) imino]-1,6-hexanediy[(2,2,6,6-tetramethy-4-piperidinyl)imino]]; N,N',N'',N'''-tetrakis(4,6-bis(butyl-(N-methyl-2,2,6,6-tetramethylpiperidin-4-yl)-amino)triazim2-yl)-4,7-diazadecane-1,10-diamine; (1,6-hexanediamine, N, N'-bis(2,2,6,6-tetramethyl-4-piperidinyl)-polymer, and poly-(N-β-hydroxyethyl-2,2,6,6-tetramethyl-4-hydroxy-piperidyl succinate). They are commercially available from Ciba Speciality Chemicals Corporation under the Chimassorb 944 trademark, Chimassorb 119 trademark, Chimassorb 2020 trademark and Tinuvin 622 trademark, respectively.

The olefin polymer can be polyethylene, such as HDPE, LLDPE, LDPE, or preferably a crystalline propylene polymer, most preferably either a crystalline propylene homopolymer having a moiety soluble in xylene at ambient temperature greater than 90, most preferably greater than 93, or a semi-crystalline, random polymer of propylene and ethylene and/or linear or branched $C_4$-$C_{10}$ alpha-olefin with a moiety soluble in xylene at ambient temperature greater than 85, or their mixtures. The preferred α-olefins are 1-butene, 1-hexene, 1-octene, 4-methyl-1-pentene. In the polymer the total comonomer content varies from 0.05% to 20% by weight. The above-mentioned crystalline polymers preferably have a stereoregularity of isotactic type of the propylenic sequences.

Heterophasic olefin polymer compositions can also be used and are constituted by (A) crystalline olefin polymer as mentioned above, and (B) an elastomeric olefin polymer. The composition typically contains polymer fraction (B) in quantities from 5% to 80% by weight, and crystalline polymer (A) in quantities from 20% to 95% by weight. The elastomeric olefin polymer is typically a polymer of ethylene with a $C_3$-$C_{10}$ α-olefin and optionally a diene, wherein the ethylene content typically ranges from 15 to 85% by weight and, when present, the diene content ranges from 0.5 to 5% by weight. Polymer (B) is preferably selected form ethylene-propylene copolymer and ethylene-propylene-diene rubber terpolymer. Said heterophasic polymer compositions are prepared according to known methods via mixing in the melted state of the above-mentioned components, or sequential copolymerization in the presence of stereospecific catalysts, such as Ziegler-Natta catalysts.

The crystalline propylene polymer can also have stereoregularity of syndiotactic type of the propylenic sequences

In general, the additivated polyolefins used to prepare the fibres according to the present invention have a melt flow index value, determined according to method hereinbelow, between 0.5 and 100 g/10 minutes, more preferably between 1.5 and 35 g/10 minutes, obtained directly in polymerization or through controlled radical degradation.

The stabiliser mixture components may be incorporated into the olefin polymer in any conventional methods, such as by dry blending the stabilisers directly with polymer pellets, by means of tumble mixers and Henschel blenders. Solutions, emulsions or slurries of the stabiliser mixture components can be sprayed onto or admixed with granular polymers, with or without subsequent evaporation of the solvent. For example, granules of the olefin polymer can be coated or impregnated with the stabiliser components in a fluidised bed according to the process of U.S. Patent No.

5,141,772. The stabiliser components can also be blended with molten polymers by means of a Banbury mixer, Brabender mixer, roll mill or screw extruder.

The stabiliser mixture components can also be added to the olefin polymer in the form of a masterbatch according to the conventional techniques discussed in U.S. Patent No. 5,236,962.

In addition to the above-mentioned stabiliser mixture, the olefin polymer of the present invention may contain other additives as appropriate for the intended use of the polymer composition, i.e. fibres, provided that the added additives are not stabilisers. Suitable further additives commonly employed in the art are anti-slip agents, antistatic agents, flame retardants, fillers, nucleating agents, pigments, anti-soiling agents, photosensitizers, for example.

The present invention is directed to thermoweldable fibres made up of olefin polymers containing the stabilisers in the above-mentioned amounts. More particularly, it relates to staple fibres.

Typically, the fibres according to the present invention have tenacity of at least 16 cN/tex and/or elongation at break of at least 200% and/or bonding force at 150° C of at least 350 cN.

Typically, the fibres according to the present invention have a titre ranging from 1.5 to 2.5 dtex.

The fibres of the present invention can be prepared by way of any melt spin process known in the art. In particular, they can be prepared in form of staple fibres, by using both long-spinning and short-spinning apparatuses.

The long-spinning apparatuses normally comprise a first spinning section where the fibres are extruded and air-cooled in a quenching column at a relatively high spinning speed. Subsequently, these fibres go to the finishing step, during which they are drawn, crimped-bulked and cut. Generally, the above mentioned finishing step is carried out separately with respect to the spinning, in a specific section where the fibre rovings are gathered into one single big roving. Said big roving is then sent to drawing, crimping-bulking and cutting apparatuses which operate at a speed ranging from 100 to 200 m/min.

In other types of long-spinning apparatuses the above mentioned finishing steps are carried out in sequence with the spinning step. In this case the fibres go directly from the gathering to the drawing rollers, where they are drawn.

The process conditions generally adopted when using the long-spinning apparatuses are the following:

- output per hole: greater than 0.1 g/min, preferably from 0.15 to 1 g/min, more preferably from 0.2 to 0.5 g/min;
- take up speed: equal to or higher than 500 m/min, preferably from 500 to 3500 m/min, more preferably from 600 to 2000 m/min;
- - space where the fibres cool off and solidify after exiting the die: greater than 0.50m.

Moreover, it is preferable that the draw ratio be from 1.1 to 4.

For further details on the long-spinning apparatuses reference is made to Friedelm Hauser "Plastics Extrusion Technology", Hauser Publishers, 1988, chapter 17.

The short-spinning apparatuses allow for a continuous operation, since the spinning speed is compatible with the drawing, crimping and cutting speeds.

The process conditions which are best suited to be used according to the present invention using short-spinning apparatuses are the following. The output per hole ranges from 0.005 to 0.18 g/min, preferably from 0.008 to 0.07 g/min, more preferably from 0.01 to 0.03 g/min. The take up speed ranges from 30 to 500 m/min, preferably from 40 to 250 m/min, more preferably from 50 to 100 m/min. The draw ratios range from 1.1 to 3.5, preferably from 1.2 to 2.5. Moreover, the fibre cooling and solidification space at the output of the die (cooling space) is preferably greater than 2 mm, more preferably greater than 10 mm, in particular from 10 to 350 mm. Said cooling is generally induced by an air jet or flow.

For further details on the short-spinning apparatuses reference is made to M. Ahmed, "Polypropylene fibres science and technology", Elsevier Scientific Publishing Company (1982) pages 344-346.

The spinning temperature for the above long-spinning and short-spinning apparatuses generally ranges from 220° to 340° C, preferably from 250° to 300° C. In particular, the extruding temperature can range from 260° to 275° C without negatively affecting the capability of the fibre to bond each other.

After the production of the staple in a first step, there is the formation of a fibre web by passing the staple fibres through a carding machine, and by thermal bonding by calendering (calender rolls are employed).

Independently from the specific thermal bonding method employed, the bonding temperatures are preferably within the range from 120° to 160° C, more preferably from 130° to 145° C.

A further embodiment of the present invention relates to thermally bonded articles, in particular non-woven fabrics, produced with the staple fibres according to the present invention.

In a further embodiment, the present invention relates to a multilayer non-woven fabric made from two or more layers wherein at least one layer is made of the above-mentioned thermal-bonded non-woven fabric. The other layer(s) may be non-woven fabric(s) as well that is/are made of other kind of polymers or polymer compositions.

The non-woven fabric according to the present invention may also be laminated with cast film for producing another type of composite structure.

Typically, a non-woven fabric with a weight of 20 grams/$m^2$ made according to the present invention has CD

tenacity of at least 8 N/5cm and/or MD tenacity of at least 30 N/5cm and CD elongation at break of at least 35% and/or MD elongation at break of at least 30%. It typically has a value of thermal-bonding index of at lest 15 N/5cm.

The abbreviation "MD" means "machine direction", and refers to a direction "along the length" of the fibre, i.e., in the direction of the fibre; the abbreviation "CD" means "cross direction", and refers to a direction across the fibre, perpendicular to the machine or longitudinal direction.

The following examples are given to illustrate and not to limit the present invention.

The data relating to the polymer and the fibres of the examples are determined by way of the methods reported below.

- MFR: according to the ISO method 1133 (230° C, 2.16 kg).
- Titre of fibres: from a 10 cm long roving, 50 fibres are randomly chosen and weighed. The total weight of the said 50 fibres, expressed in mg, is multiplied by 2, thereby obtaining the titre in dtex.
- Tenacity and Elongation (at break) of fibres: from a 500 m roving a 100 mm long segment is cut. From this segment the single fibres to be tested are randomly chosen. Each single fibre to be tested is fixed to the clamps of an Instron dinamometer (model 1122) and tensioned to break with a traction speed of 20 mm/min for elongations lower than 100% and 50 mm/min for elongations greater than 100%, the initial distance between the clamps being of 20 mm. The ultimate strength (load at break) and the elongation at break are determined.
  The Tenacity is derived using the following equation:

$$\text{Tenacity} = \text{Ultimate strength (cN)} \times 10/\text{Titre (dtex)}.$$

- Bonding force of fibres: specimens are prepared from a 400 tex roving (method ASTM D 1577-7) 0.4 meter long, made up of continuous fibres. After the roving has been twisted eighty times, the two extremities are united, thus obtaining a product where the two halves of the roving are entwined as in a rope. The thermal bonding is carried out on said specimen using a Bruggel HSC-ETK thermal bonding machine, operating at various plate temperatures (see in the tables) using a clamping pressure of 0.28 MPa and 1 second bonding time. The previously said dynamometer, operated at a traction speed of 2 cm/min, is used to measure the average force required to separate the two halves of the roving which constitute each specimen at the thermal bonding point. The obtained graph shows the force varying from minimum to maximum values (peaks are obtained). The value resulting from averaging out all the minimum and maximum values shown in the graph represents the said average force. The result, expressed in cN, is obtained by averaging out at least eight measurements, and represents the bond strength of the fibres. When non-woven samples are prepared, the bond strength is determined on specimens 20 cm long and 5 cm wide. The 5 cm wide extremities are fixed to the clamps of the dynamometer and tensioned at a clamp speed of 100 mm/min (the initial distance between the clamps being of 10 cm). The maximum force measured in the machine direction (MD) and in the cross direction (CD), with respect to the calendering step, represents the strength of the fibres.
- Thermal Bonding Index: calculated as $\sqrt{(TenCD \times TenMD)} \times 20/X$, wherein X is the weight of the non-woven fabric, and 20 is the reference weight.

Example 1

In a twin-screw extruder a propylene homopolymer (MFR 11 g/10 min and solubility in xylene at room temperature of 3.2% by weight) is mixed, molten and granulated in the presence of 200 ppm of calcium stearate as anti acid agent and a stabiliser composition consisting of:

- 125 ppm of a octadecyl 3-(3',5'-di-tert-butyl-4'-hydroxyphenyl)propionate, marketed with the trademark Irganox 1076 by Ciba Speciality Chemical Corporation,
- 110 ppm of 5,7-di-tert-butyl-3-(3,4-di-methylphenyl)-3H-benzofurane-2-one, marketed with trademark Irganox HP136 by Ciba Speciality Chemical Corporation,
- 220 ppm of tris(2,4-di-tert-butylphenyl)phosphite, marketed with the trademark Irgafos 168 by Ciba Speciality Chemical Corporation, and
- 200 ppm of poly(N-(3-hydroxymethyl-2,2,6,6-tetramethyl-4-hydroxy-piperidyl succinate), marketed with the trademark Tinuvin 622 by Ciba Speciality Chemical Corporation).

The stabilised polymer is spun in a conventional long spinning line operating at conditions reported in Table 1. The filament is online stretched and crimped. The stretching conditions are reported in Table 2.
The 40 mm staple fibres thus obtained have the mechanical features and spinning behaviour reported in Table 3.

Table 1

| | |
|---|---|
| Spinnerette temperature, ° C | 290 |
| Melting temperature, ° C | 287 |
| Quenching air temperature, ° C | 12-14 |
| Throughput, g/minxhole | 0.345 |

Table 2

| | |
|---|---|
| $1^{st}$ godet speed, r.p.m. | 1510 |
| $1^{st}$ godet temperature, ° C | 40 |
| $2^{nd}$ godet speed, r.p.m. | 1520 |
| $2^{nd}$ godet temperature, ° C | 40 |
| $3^{rd}$ godet speed, r.p.m. | 1920 |
| $3^{rd}$ godet temperature, ° C | 120 |
| $4^{th}$ godet speed, r.p.m. | 1900 |
| $4^{th}$ godet temperature, ° C | 115 |
| $4^{th}$ godet speed/$1^{st}$ godet speed ratio | 1.26 |

Table 3

| Properties of 40 mm Staple Fibres | Example 1 | Comparative example 1 |
|---|---|---|
| Average filament titer, dtex | 2.16 | 2.12 |
| MFR, g/10' | 38 | 65 |
| Tenacity, cN/tex | 19.8 | 15.3 |
| Elongation at break, % | 325 | 225 |
| Spinning behaviour | Good | Poor[1)] |
| [1)] Breakage of several filament during the spinning. | | |

Comparative Example 1

Example 1 is repeated with the only difference that the stabiliser composition is phenol-free.
The staple fibres obtained have the mechanical features and spinning behaviour listed in Table 3.
The fibres of example 1 have much more tenacity and elongation than the ones of comparative example 1, the latter being affected by evident polymer degradation.

Example 2

The staple fibres produced in example 1 are carded/calendered using a conventional carding/calendaring machine using the conditions reported in Table 4 to produce a non-woven fabric having a 20g/$m^2$ weight.

Table 4

| | |
|---|---|
| Carding speed, m/min | 120 |

(continued)

| | |
|---|---|
| Embossed calendering roll temperature, ºC | 150 |
| Smooth calendering roll temperature, °C | 139 |

Comparative Example 2

The staple fibres produced in comparative example 1 are carded/calendered using the same conventional carding/calendaring machine and the same setting conditions used for the example 1.

Table 5 contains the properties of the non-woven fabric produced in example 2 and comparative example 2, respectively.

The Edana Standard Method is used to test the properties of the non-woven fabric.

Table 5

| Properties of the Non-Woven Fabric | Comparative example 2 | Example 2 |
|---|---|---|
| Weight, $g/m^2$ | 20 | 20 |
| CD Tenacity, N/5cm | 4.2 | 12.0 |
| MD Tenacity, N/5cm | 25.0 | 37.0 |
| CD Elongation at break, % | 32 | 42 |
| MD Elongation at break, % | 28 | 35 |
| Thermal Bonding Index, N/5cm | 11.6 | 21.1 |

In Table 5 some properties of the non-woven fabric are reported. In particular, the thermal bonding index and tenacity of the non-woven fabric according to the present invention are remarkably improved. The thermal bonding index is almost twice the one of the comparison fabric and CD tenacity is almost 3 times the CD tenacity of the comparison fabric.

Although the phenolic antioxidant is present, both the fibres of example 1 and the nonwoven fabric of example 2 show no colour change (gas fading).

Example 3 and Comparative Example 3

The compositions obtained in example 1 and comparative example 1 are spun in a Leonard 25 spinning pilot line having length/diameter ratio of the screw of 25, screw diameter of 25 mm and compression ratio of 1:3. The line is marketed by Costruzioni Meccaniche Leonard-Sumirago (VA).

Spinning tests are carried out with the following conditions: hole diameter: 0.4 mm, output: 0.4 g/minxhole and mechanical values are measured at 1500 m/min winding speed with stretching ratio 1:1.5.

The properties of the fibres thus obtained are reported in Table 6.

In Table 6 the data show that with respect to the comparative one, the polymer composition according to the present invention is easily and steadily processable and at the same time the fibres obtained have good values of the tenacity and particularly bonding force, while it is not even possible to process the polymer composition of comparative example due to a severe melt degradation, resulting in insufficient melt strength and thus not stable spinning process. Related fibres can not be collected for testing.

Table 6

| Process Conditions and Properties of Fibres | Example 3 | Comparative example 3 |
|---|---|---|
| Extrusion temperature, °C | 280 | 280 |
| MFR,g/10min | 70 | polymer drops out of the spinneret spinning not stable |
| Fibre titre, dtex | 2.0 | - |
| Tenacity, cN/tex | 25.4 | - |
| Elongation at break, % | 235 | - |

(continued)

| Process Conditions and Properties of Fibres | Example 3 | Comparative example 3 |
|---|---|---|
| Bonding force at 150° C, cN | 645 | - |
| Bonding force at 145° C, cN | 420 | - |

Examples 4 and 5

The compositions of example 1 are spun in a Leonard 25 spinning pilot line having length/diameter ratio of the screw of 5 and marketed by Costruzioni Meccaniche Leonard-Sumirago (VA).

The spinning conditions are the same as the ones of example 3 except for lower extrusion temperatures as reported in Table 8.

The properties of the fibres thus obtained are reported in Table 7.

Comparative Examples 4 and 5

Examples 4 and 5 are repeated except that the composition of comparative example 1 is used in the place of that of example 1.

Table 7

| Process Conditions and | Examples | | Comparative Examples | |
|---|---|---|---|---|
| Properties of Fibres | 4 | 5 | 4 | 5 |
| Extrusion temperature, °C | 270 | 265 | 270 | 265 |
| MFR, g/10 min | 45 | 25 | polymer drops out of the spinneret spinning not stable | polymer drops out of the spinneret spinning not stable |
| Fibre titre, dtex | 2.0 | 2.0 | - | - |
| Tenacity, cN/tex | 23.9 | 24.7 | - | - |
| Elongation at break, % | 275 | 275 | - | - |
| Bonding force at 150° C, cN | 780 | 370 | - | - |

In Table 7 the data show that with respect to the comparative ones, the polymer composition according to the present invention is easily processable and the fibres obtained maintain a good bonding force value even at lower MFR of the fibre achieved at lower extrusion temperature. In contrast, the comparative polymer is not processable in spite of a lower extrusion temperature that should increase the melt strength, and is subjected to chemical degradation.

The compositions according to the present invention allow to obtain fibres that have high bonding force values because of low polymer degradation and show good balance between tenacity and elongation in a wide range of extrusion temperatures (265 - 280° C).

Example 6

The composition of example 1 is subjected to a test of multiple extrusion process. MFR values are measured on the polymer before extrusion and then after a 3rd and 5th re-granulation passage in a COMACPLAST 19 extruder. The operating profile of the extrusion process is as follows:

- Melt temperature: 287° C,
- Head pressure: $1.9 \times 10^{-4}$ Pa,
- Screw speed: 150 rpm.

Comparative Example 6

Example 6 is repeated with the exception that the composition of comparative example 1 is used in the place of that of example 1.

The good melt retention of stabiliser mixture components according to the present invention is confirmed by a multiple extrusion test.

Table 8

| MFR and MFR variation | Example 6 | Comparative Example 6 |
|---|---|---|
| MFR before the first passage (MFR $1^{st}$), g/10 min | 12.6 | 9.3 |
| MFR after the $3^{rd}$ passage (MFR $3^{rd}$), g/10 min | 30.7 | 37.3 |
| MFR variation after the third passage, % | 144 | 300 |
| MFR after the $5^{th}$ passage (MFR $5^{th}$), g/10 min MFR variation after the fifth passage, % | 60 | 81.4 |
| | 375 | 775 |

$$\text{MFR variation at the } 3^{rd} \text{ passage} = \frac{MFR3rd - MFR1st}{MFR1st} \times 100;$$

$$\text{MFR variation at the } 5^{th} \text{ passage} = \frac{MFR5th - MFR1st}{MFR1st} \times 100.$$

In Table 8 the data show that the polymer composition according to the present invention has a better melt stability than that of comparative example 1 as shown by a lower increase of the MFR value after the multiple extrusion passages.

## Claims

1. Thermoweldable fibres made up of an olefin polymer composition comprising (ppm with respect to the polymer):

   - a lactone of the furan-2-one type,
   - a phenol in amounts of 50 to 200 ppm,
   - a sterically hindered amine in amounts of 50 to 300 ppm comprising monomeric or oligomeric compounds containing, in the molecule, one or more substituted piperidine groups having general formula:

   (IX)

   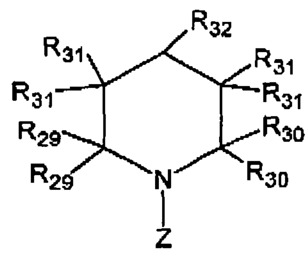

   in which the $R_{29}$ radicals, equal or different, are $C_1$-$C_4$ alkyl radicals, or tetramethylpiperidine radicals, or the alkyl radicals form with the piperidine carbon atoms to which they are linked a $C_5$-$C_9$ cycloalkyl radical; the $R_{30}$ radicals, equal or different, are hydrogen or $C_1$-$C_{18}$ alkyl radicals, $C_7$-$C_{18}$ arylalkyl radicals, or the alkyl radical forms with the piperidine carbon atoms to which they are linked a $C_5$-$C_{10}$ cycloalkyl, radical; the $R_{31}$ radicals, equal or different, are hydrogen, or $C_1$-$C_{18}$ alkyl radicals or $C_7$-$C_{18}$ arylalkyl radicals; the $R_{32}$ radical is hydrogen, or a $C_1$-$C_8$ alkyl radical, or a benzyl radical; Z is hydrogen, or a $C_1$-$C_{18}$ alkyl, $C_1$-$C_{12}$ alkylene, $C_1$-$C_{12}$ alkenyl, $C_3$-$C_5$ alkynyl, $C_7$-$C_{18}$ arylalkyl, $C_2$-$C_4$ acyl, $C_2$-$C_{18}$ alkanoyl, $C_3$-$C_{18}$ alkoxyalkyl, $C_3$-$C_{18}$ alkenoyl, oxylic, cyanomethyl, xylylenyl radical, or a radical having a 1 to 4 valence and containing from 1 to 4 hydroxyl groups and, optionally, ether, ester, or heterocyclic groups, being the valences of said radical linked to the nitrogen of piperidine groups, or a bivalent radical containing one or more ester or amide groups, or a -CO-N($R_{33}$)($R_{34}$) radical where $R_{33}$ and $R_{34}$ are hydrocarbon radicals; and
   - an organic phosphite and/or organic phosphonite in amounts of 50 to less than 280 ppm;

   the polymer composition containing the unsubstituted furan-2-one moiety in amounts ranging from 11 to 49 ppm with respect to the polymer.

2. The thermoweldable fibres according to claim 1, wherein the polymer composition contains 40 to 220 ppm of lactone of the furan-2-one type.

3. The thermoweldable fibres according to claim 1, wherein the lactone in the olefin polymer composition is selected from 5,7-di-tert-butyl-benzofuran-3-phenyl-2-onE, 5,7-di-tert-butyl-benzofuran-3-(3,4-di-methyl-phenyl)-2-one and 5,7-di-tert-butyl-benzofuran-3-(2,3-di-methyl-phenyl)-2-one or a mixture of any of such compounds.

4. The thermoweldable fibres according to claims 1 to 3 wherein the olefin polymer is selected from:

   1) isotactic homopolymer of propylene;
   2) polyethylene;
   3) crystalline polymers of propylene with ethylene and/or other linear or branched $C_4$-$C_{10}$ $\alpha$-olefins, where the total comonomer content varies from 0.05% to 20% by weight; and
   4) heterophasic olefin polymer composition constituted by (A) crystalline polymer selected from an isotactic homopolymer of propylene or one of the polymers mentioned in item (3), and (B) an elastomeric olefin polymer,

5. The thermoweldable fibres according to any of claims 1 to 4 wherein the thermoweldable fibres are staple fibres.

6. A process for producing the thermoweldable fibres according to any of claims 1 to 5 which comprises spinning the thermoweldable fibres according to claims I to 5 in the molten state and drawing the solid thermoweldable fibres.

7. Non-woven fabric produced from the thermoweldable fibres according to any of claims 1 to 5.

8. Multilayer non-woven fabric produced from the thermoweldable fibres according to any of claims 1 to 5.

**Patentansprüche**

1. Thermoschweißbare Fasern, aufgebaut aus einer Olefinpolymer-Zusammensetzung, die Folgendes umfasst (in ppm bezogen auf das Polymer):

   - ein Lacton des Furan-2-on-Typs,
   - ein Phenol in Mengen von 50 bis 200 ppm,
   - ein sterisch gehindertes Amin in Mengen von 50 bis 300 ppm, umfassend monomere oder oligomere Verbindungen, die im Molekül eine oder mehr substituierte Piperidingruppe(n) mit der folgenden allgemeinen Formel enthalten:

   (IX)

   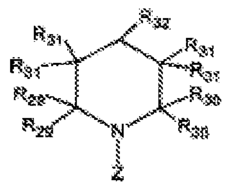

   worin die $R_{29}$-Reste, gleich oder verschieden, $C_1$-$C_4$-Alkylreste, oder Tetramethylpiperidinreste darstellen, oder die Alkylreste mit den Piperidinkohlenstoffatomen, mit denen sie verknüpft sind, einen $C_5$-$C_9$-Cycloalkylrest bilden; die $R_{30}$-Reste, gleich oder verschieden, Folgendes darstellen: Wasserstoff- oder $C_1$-$C_{18}$-Alkylreste, $C_7$-$C_{18}$-Arylalkylreste, oder der Alkylrest mit den Piperidinkohlenstoffatomen, mit dem sie verknüpft sind, einen $C_5$-$C_{10}$-Cycloalkylrest bildet; die $R_{31}$-Reste, gleich oder verschieden, Wasserstoff, oder $C_1$-$C_{18}$-Alkylreste oder $C_7$-$C_{18}$-Arylalkylreste darstellen; der $R_{32}$-Rest Wasserstoff oder einen $C_1$-$C_8$-Alkylrest oder einen Benzylrest darstellt; Z Folgendes darstellt: Wasserstoff, oder einen $C_1$-$C_{18}$-Alkyl-, $C_1$-$C_{12}$-Alkylen-, $C_3$-$C_{12}$-Alkenyl-, $C_3$-$C_5$-Alkinyl-, $C_7$-$C_{18}$-Arylalkyl-, $C_2$-$C_4$-Acyl-, $C_2$-$C_{18}$-Alkanoyl-, $C_3$-$C_{18}$-Alkoxyalkyl-, $C_3$-$C_{18}$-Alkenoyl-, Oxyl-, Cyanomethyl-, Xylylenylrest, oder einen Rest mit einer Valenz von 1 bis 4 und von 1 bis 4 Hydroxylgruppen und, optional, Ether-, Ester- oder Heterocyclusgruppe(n) enthält, die Valenzen von dem Rest darstellen, der mit dem Stickstoff von Piperidingruppen verknüpft ist, oder einen bivalenten Rest, der ein oder mehr Ester- oder Amidgruppe(n) enthält, oder einen -CO-N($R_{33}$)($R_{34}$)-Rest, worin $R_{33}$ und $R_{34}$ Kohlenwasserstoffreste darstellen; und
   - ein organisches Phosphit und/oder organisches Phosphonit in Mengen von 50 bis weniger als 280 ppm;

   die Polymerzusammensetzung, die den nicht substituierten Furan-2-on-Teil in Mengen enthält, die im Bereich von 11 bis 49 ppm bezogen auf das Polymer liegen.

2. Thermoschweißbare Fasern nach Anspruch 1, worin die Polymerzusammensetzung 40 bis 220 ppm Lacton des Furan-2-on-Typs enthält.

3. Thermoschweißbare Fasern nach Anspruch 1, worin das Lacton in der Olefinpolymer-Zusammensetzung aus 5,7-Di-tert-butyl-benzofuran-3-phenyl-2-on, 5,7-Di-tert-butyl-benzofuran-3-(3,4-di-methylphenyl)-2-on und 5,7-Di-tert-butylbenzofuran-3-(2,3-di-methylphenyl)-2-on oder einem Gemisch aus jedweder von derartigen Verbindungen ausgewählt ist.

**4.** Thermoschweißbare Fasern nach den Ansprüchen 1 bis 3, worin das Olefinpolymer ausgewählt ist aus:

1) isotaktischem Homopolymer von Propylen;
2) Polyethylen;
3) kristallinen Polymeren von Propylen mit Ethylen und/oder anderen linearen oder verzweigten $C_4$-$C_{10}$-α-Olefinen, worin der Gesamtcomonomer-Gehalt von 0,05 Gew.-% bis 20 Gew-% variiert; und
4) einer heterophasischen Olefinpolymer-Zusammensetzung, aufgebaut aus (A) einem kristallinen Polymer, das aus einem isotaktischen Homopolymer von Propylen oder einem der in Punkt (3) erwähnten Polymere ausgewählt ist, und (B) einem elastomeren Olefinpolymer.

**5.** Thermoschweißbare Fasern nach einem der Ansprüche 1 bis 4, worin die thermoschweißbaren Fasern Stapelfasern darstellen.

**6.** Verfahren zum Herstellen der thermoschweißbaren Fasern nach einem der Ansprüche 1 bis 5, das das Spinnen der thermoschweißbaren Fasern nach den Ansprüchen 1 bis 5 im geschmolzenen Zustand und das Strecken der festen thermoschweißbaren Fasern umfasst.

**7.** Vliesstoff, hergestellt aus den thermoschweißbaren Fasern nach einem der Ansprüche 1 bis 5.

**8.** Mehrschichtiger Vliesstoff, hergestellt aus den thermoschweißbaren Fasern nach einem der Ansprüche 1 bis 5.

## Revendications

**1.** Fibres thermosoudables réalisées à partir d'une composition de polymère oléfinique comprenant (en ppm par rapport au polymère) :

- une lactone du type furann-2-one,
- un phénol en des quantités de 50 à 200 ppm,
- une amine stériquement encombrée en des quantités de 50 à 300 ppm comprenant des composés monomères ou oligomères contenant, dans la molécule, un ou plusieurs groupes pipéridine substitués présentant la formule générale :

(IX)

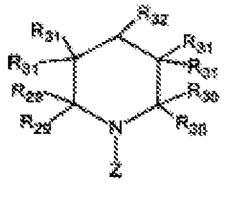

dans laquelle les radicaux $R_{29}$, identiques ou différents, représentent des radicaux alkyle en $C_1$-$C_4$, ou des radicaux tétraméthylpipéridine, ou les radicaux alkyle forment, avec les atomes de carbone du cycle pipéridine auxquels ils sont attachés, un radical cycloalkyle en $C_5$-$C_9$; les radicaux $R_{30}$, identiques ou différents, représentent hydrogène ou des radicaux alkyle en $C_1$-$C_{18}$, des radicaux arylalkyle en $C_7$-$C_{18}$, ou les radicaux alkyle forment, avec les atomes de carbone du cycle pipéridine auxquels ils sont attachés, un radical cycloalkyle en $C_5$-$C_{10}$; les radicaux $R_{31}$, identiques ou différents, représentent hydrogène ou des radicaux alkyle en $C_1$-$C_{18}$ ou des radicaux arylalkyle en $C_7$-$C_{18}$; le radical $R_{32}$ représente hydrogène ou un radical alkyle en $C_1$-$C_8$, ou un radical benzyle ; Z représente hydrogène ou un radical alkyle en $C_1$-$C_{18}$, alkylène en $C_1$-$C_{12}$, alcényle en $C_3$-$C_{12}$, alcynyle en $C_3$-$C_5$, arylalkyle en $C_7$-$C_{18}$, acyle en $C_2$-$C_4$, alcanoyle en $C_2$-$C_{18}$, alcoxyalkyle en $C_3$-$C_{18}$,

alcénoyle en $C_3$-$C_{18}$, oxylique, cyanométhyle, xylylènyle, ou un radical présentant 1 à 4 valences et contenant 1 à 4 groupes hydroxyle et, éventuellement, des groupes éther, ester, ou hétérocycliques, qui sont les valences dudit radical liées à l'azote du groupe pipéridine, ou un radical divalent contenant un ou plusieurs groupes ester ou amide, ou un radical -CO-N($R_{33}$)($R_{34}$) où $R_{33}$ et $R_{34}$ sont des radicaux hydrocarbonés ; et
- un phosphite organique et/ou un phosphonite organique en des quantités de 50 à moins de 280 ppm ;

la composition polymère contenant le fragment furann-2-one non substitué en ces quantités allant de 11 à 49 ppm par rapport au polymère.

**2.** Fibres thermosoudables selon la revendication 1, où la composition polymère contient 40 à 220 ppm de lactone du type furann-2-one.

**3.** Fibres thermosoudables selon la revendication 1, où la lactone dans la composition de polymère oléfinique est choisie parmi la 5,7-di-tert-butyl-benzofuranne-3-phényl-2-one, la 5,7-di-tert-butyl-benzofuranne-3-(3,4-di-méthyl-phényl)-2-one et la 5,7-di-tert-butylbenzofuranne-3-(2,3-di-méthyl-phényl)-2-one ou un mélange d'un quelconque de ces composés.

**4.** Fibres thermosoudables selon les revendications 1 à 3 où le polymère oléfinique est choisi parmi :

1) un homopolymère isotactique du propylène ;
2) le polyéthylène ;
3) les polymères cristallins du propylène avec de l'éthylène et/ou d'autres $\alpha$-oléfines en $C_4$-$C_{10}$ linéaires ou ramifiées, la teneur totale en comonomères variant de 0,05% à 20% en poids; et
4) une composition de polymère oléfinique à plusieurs phases hétérogènes constituée par (A) un polymère cristallin choisi parmi un homopolymère isotactique du propylène ou un des polymères mentionnés au point (3), et (B) un polymère oléfinique élastomère.

**5.** Fibres thermosoudables selon l'une quelconque des revendications 1 à 4 où les fibres thermosoudables sont des fibres discontinues.

**6.** Procédé de production des fibres thermosoudables selon l'une quelconque des revendications 1 à 5 qui comprend le filage des fibres thermosoudables selon les revendications 1 à 5 à l'état fondu et l'étirage des fibres thermosoudables solides.

**7.** Tissu non tissé produit à partir des fibres thermosoudables selon l'une quelconque des revendications 1 à 5.

**8.** Tissu non tissé multicouche produit à partir des fibres thermosoudables selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0231038 A
- US 6521681 B
- US 5834541 A
- EP 1260618 A
- US 4325863 A
- US 4338224 A
- US 5175312 A
- US 5344860 A
- GB 2322374 A
- US 4187212 A
- US 4290941 A
- GB 1372528 A
- US 5141772 A
- US 5236962 A


### Non-patent literature cited in the description


- **FRIEDELM HAUSER.** Plastics Extrusion Technology. Hauser Publishers, 1988
- **M. AHMED.** Polypropylene fibres science and technology. Elsevier Scientific Publishing Company, 1982, 344-346